# EUROPÄISCHE PATENTSCHRIFT

(11) **EP 3 639 643 B1**
(45) Veröffentlichungstag und Bekanntmachung des Hinweises auf die Patenterteilung: **12.04.2023**
(21) Anmeldenummer: 19204184.6
(22) Anmeldetag: 18.10.2019
(51) Int. Cl.: A01C 7/08, A01C 7/10

(54) **GERÄT ZUM VERTEILEN VON SCHÜTTGUT MIT EINER EINRICHTUNG ZUR VERSTOPFUNGSERKENNUNG**
DEVICE FOR DISTRIBUTING BULK MATERIAL WITH A DEVICE FOR DETECTING BLOCKAGES
DISPOSITIF DE DISTRIBUTION DE LA MATIÈRE EN VRAC À L'AIDE D'UN DISPOSITIF DE DÉTECTION D'OBSTRUCTION

(30) Priorität: 19.10.2018 DE 102018126118
(43) Veröffentlichungstag der Anmeldung: 22.04.2020
(73) Patentinhaber: Hugo Vogelsang Maschinenbau GmbH, 49632 Essen (DE)
(72) Erfinder: Hüdepohl, Nadja, 49624 Bunnen/Löningen (DE)
(74) Vertreter: Eisenführ Speiser

(56) Entgegenhaltungen:
- EP-A1- 1 341 122
- EP-A1- 3 014 968
- EP-A1- 3 153 825
- WO-A1-2011/054340
- WO-A1-2012/125575
- WO-A1-2015/028326
- CN-B- 102 630 411

## Beschreibung

Die vorliegende Erfindung betrifft ein Gerät zum Verteilen von Schüttgut, insbesondere Saatgut, auf landwirtschaftliche Nutzflächen mit einer Schüttgutquelle zur Bereitstellung von Schüttgut, einem mit der Schüttgutquelle verbundenen Strömungspfad, wobei der Strömungspfad mindestens eine Leitung zum Fördern des Schüttguts von der Schüttgutquelle in Richtung der Nutzfläche aufweist, und eine Einrichtung zur Verstopfungserkennung in der mindestens einen Leitung.

Geräte der vorbezeichneten Art verteilen Schüttgut auf eine vorbestimmte Arbeitsbreite. Vorzugsweise weisen diese Geräte mehrere Leitungen an ihrem stromabwärtsseitigen Ende auf, welche jeweils einen Anschlussabschnitt zur Kopplung mit einer Ausbringvorrichtung aufweisen, wobei die Ausbringvorrichtung insbesondere zum Abgeben des Schüttguts in Richtung der Nutzfläche eingerichtet ist. Solche Geräte sind insbesondere im Bereich der Saatgutausbringung bekannt und weit verbreitet. Geräte zum Verteilen von Saatgut sind beispielsweise bekannt aus US 5,740,746 oder US 6,079,340.

Bei den bekannten Verteilergeräten kann es, auch aufgrund der großen Leitungslängen, zu teilweisen oder vollständigen Verstopfungen im Strömungspfad kommen. Bei Geräten, deren Ausbringvorrichtungen in den Boden eingreifen, kann es beispielsweise bei Rückwärtsfahrten oder aufgrund bestimmter Bodenzusammensetzungen auch im Bereich der Ausbringvorrichtungen zu solchen Verstopfungen kommen. Werden solche Verstopfungen nicht erkannt, führt dies dazu, dass ganze Reihen einer landwirtschaftlichen Nutzfläche, die von den Verteilgeräten an dafür vorgesehenen Fahrzeugen abgefahren werden, nicht mit Schüttgut versorgt werden. Ebenso kann eine unerkannte Verstopfung auch zu einer übermäßigen Abgabe des Schüttguts in anderen Bereichen führen und damit einer Übersättigung der landwirtschaftlichen Nutzflächen führen. Beides führt zu Ertragseinbußen im landwirtschaftlichen Betrieb, die unbedingt vermieden werden sollten. Verstopfungen im Strömungspfad sollen daher zur Vermeidung von Ertragsausfällen unmittelbar ohne eine signifikante zeitliche Verzögerung erfasst werden, damit der Betrieb zur Verstopfungsbehebung unmittelbar unterbrochen werden kann.

Angesichts der in der Branche immer größer werdenden Nutzflächen und Verteilgeräte mit immer mehr Schüttgutabgängen mit entsprechenden Leitungen und Ausbringvorrichtungen wird es zunehmend schwerer für den einzelnen Anwender, Verstopfungen in diesen Strömungspfaden selbst zu erkennen, sodass das Risiko von Ertragsausfällen steigt. Bislang werden solche Verstopfungen mitunter mittels Einrichtungen zur Verstopfungserkennung erkannt, welche in den Strömungspfad hineinragen bzw. innerhalb des Strömungspfades angeordnet sind und auf diese Weise Messsignale, insbesondere akustische Signale des strömenden Mischfluids, erfassen. Entsprechende Vorrichtungen sind aus WO 2012/125575 A1 und US 6,489,784 B2 bekannt. Es sind ferner Sensoren bekannt, welche durch einen in den Strömungspfad hineinragenden Klangkörper erzeugte akustische Signale erfassen, die durch den Aufprall des Schüttgutes auf den Klangkörper entstehen. Die Anordnung der entsprechenden Sensoren innerhalb des Strömungspfades bedingt jedoch ein gesteigertes Risiko der Verstopfung des Strömungspfades. Ferner werden die in den Strömungspfad hineinragenden Klangkörper nur von einem Teil des strömenden Schüttguts getroffen, sodass diese Verfahren hinsichtlich der Erkennung einer Verstopfung nur bedingt zielführend sind.

Aus EP 3 014 968 A1 ist eine Vorrichtung nach dem Oberbegriff von Anspruch 1 bekannt. Der Erfindung lag somit die Aufgabe zugrunde, bei Verteil-Geräten der eingangs bezeichneten Art eine Verbesserung anzugeben, die das Risiko von Ertragsausfällen im Betrieb minimiert, indem Verstopfungen im Strömungspfad schneller erkannt werden.

Die Erfindung löst die ihr zugrundeliegende Aufgabe durch ein Gerät zum Verteilen von Schüttgut gemäß Anspruch 1. Solche Geräte umfassen eine Einrichtung zur Verstopfungserkennung mit mindestens einem Sensor, der außen an der Leitung angebracht und dazu eingerichtet ist, mechanische Schwingungen der Leitung zu erfassen, sowie eine mit dem Sensor signalleitend verbundene Auswerteinheit, die dazu eingerichtet ist, in Abhängigkeit der erfassten mechanischen Schwingung eine Verstopfung zu erkennen. Die Erfindung macht sich hierbei die Erkenntnis zunutze, dass die Art, eine Verstopfung im Strömungspfad mittels der Erfassung der durch strömendes Schüttgut hervorgerufenen mechanischen Schwingung zu erkennen, extrem zuverlässig ist. Die Erfassung dieser Schwingung erfolgt zudem durch einen nicht invasiv in dem Strömungspfad angeordneten Sensor, sondern außen an der Leitung des Strömungspfades, wodurch eine Verstopfung der Leitung jedenfalls nicht durch den Sensor selbst noch gefördert wird. Ein besonderer Vorteil der Erfindung zeigt sich darin, dass Schwankungen der Betriebsbedingungen, wie eine Änderung des Drucks, der Temperatur oder des Volumenstroms des Schüttguts zu keiner Beeinträchtigung des Sensors führen. Der Sensor ist daher in der Lage, den Volumenstrom im Strömungspfad zu erfassen, ohne von diesem aber beeinträchtigt bzw. beschädigt zu werden. Die Erfindung macht sich hierbei die Erkenntnis zunutze, dass zur Minimierung des Risikos von Ertragsausfällen vorrangig die Erkennung einer Verstopfung, nicht aber zwingend eine Erkennung eines verringerten Volumenstroms bzw. die unmittelbare Ortung der Verstopfung entscheidend ist. Demnach erfassen die Sensoren erfindungsgemäß die mechanische Schwingung der Leitung vorzugsweise ausschließlich zur Erkennung einer Verstopfung, und nicht zum Vergleich mit Messgrößen anderer Leitungen. Dies führt zu einer erheblich schnelleren Erkennung einer Verstopfung in einer Leitung des Strömungspfades.

Die signalleitende Verbindung zwischen Sensor und Auswerteinheit kann hierbei sowohl durch eine kabellose wie auch durch kabelgebundene Datenübertragung erfolgen.

Vorzugsweise wird die mechanische Schwingung durch die Parameter Frequenz und/oder Amplitude charakterisiert. Die durch das strömende Schüttgut hervorgerufene mechanische Schwingung wird somit in ihrer Intensität und hinsichtlich der Häufigkeit der Einschläge des Schüttguts charakterisiert. Die Amplitude wird vorzugsweise durch den zeitlichen Verlauf der Frequenz und/oder der Amplitude charakterisiert werden.

Weiter vorzugsweise weisen der Sensor und/oder die Auswerteinheit einen Signalwandler auf, welcher dazu eingerichtet ist, die erfasste mechanische Schwingung, insbesondere deren Amplitude und/oder Frequenz, in ein elektrisches Signal umzuwandeln. Das elektrische Signal wird dabei in Form einer Spannung, eines Stroms oder einer Kapazität bereitgestellt. Die erfindungsgemäße Umwandlung der erfassten mechanischen Schwingung in ein elektrisches Signal ermöglicht damit eine schnelle Weiterverarbeitung des Signals. Weiter vorzugsweise ist die Auswerteinheit dazu eingerichtet, die Schwingung mit einem Schwellwert zu vergleichen und bei einer unzulässigen Abweichung von dem Schwellwert, definitionsabhängig also insbesondere einer Unter- oder Überschreitung des Schwellwertes, eine Verstopfung zu identifizieren. Ein solcher "Unzulässigkeits-" Schwellwert kann dabei als vordefinierter Schwellwert oder als Funktion der erfassten Schwingungen bereitgestellt werden.

Im Falle eines vordefinierten Schwellwerts, ist dieser vorzugsweise in einem in der Auswerteinheit integrierten oder einem separaten Speicher hinterlegt und kann mittels einer Schnittstelle der Auswerteinheit zugeführt werden. Durch das Einlesen der Amplitude und Frequenz bzw. des umgewandelten elektrischen Signals und das Vergleichen mit dem Schwellwert wird eine Verstopfung des Strömungspfades unmittelbar erkannt, sodass der Betrieb unterbrochen werden kann und Ertragsausfälle eingedämmt beziehungsweise vermieden werden können.

Im Falle eines Schwellwertes, welcher als Funktion der erfassten Schwingungen bereitgestellt wird, kann flexibel auf variierende Umgebungsbedingungen reagiert werden. Der Schwellwert wird dabei selbst aus den erfassten Schwingungen abgeleitet, sodass beispielsweise eine maximale Änderung der Amplitude von zwei aufeinanderfolgenden Schwingungen als Schwellwert vorgesehen ist.

Erfindungsgemäß weist der Strömungspfad einen mit der Leitung verbundenen Verteilerkopf auf, welcher eine Mehrzahl an Schüttgutabgängen aufweist, wobei die Schüttgutabgänge durch jeweils einen Teilkanal des Strömungspfades mit den Ausbringvorrichtungen verbunden sind. Durch die Mehrzahl an Schüttgutabgängen wird erfindungsgemäß ein Gerät zum Verteilen von Schüttgut vorgeschlagen, welches durch eine Mehrzahl von Teilkanälen des Strömungspfades Schüttgut an die Schüttgutabgänge fördert und die Ausbringung des Schüttguts auf die Nutzfläche somit gleichmäßig in einem großen Arbeitsbereich erfolgt.

Es werden im Folgenden bevorzugte Anordnungen des Sensors beschrieben. Diese Ausführungsformen sind miteinander derart kombinierbar, dass auch mehrere Sensoren an unterschiedlichen Stellen der Vorrichtung angeordnet werden können. Im Einzelnen:
Der Strömungspfad weist vorzugsweise mindestens eine Zuführleitung auf, und der mindestens eine erste Sensor ist stromaufwärts des Verteilerkopfes im Bereich der Zuführleitung angeordnet. Die Erfindung macht sich die Erkenntnis zunutze, dass das Erkennen einer Verstopfung bereits im Bereich der Zuführleitung die spätere Ortung der Verstopfung im gesamten Strömungspfad erleichtert. Erfolgt bereits in der Zuführleitung eine unzureichende Förderung von Schüttgut, so wirkt sich dies auf den gesamten stromaufwärts angeordneten Strömungspfad einschließlich des Verteilerkopfes und der Teilkanäle aus.

In einer weiteren bevorzugten Ausführungsform weist der Strömungspfad mindestens einen Leitungsbogen auf, und der mindestens eine erste Sensor ist stromaufwärts des Verteilerkopfes im Bereich des Leitungsbogens angeordnet. Durch die Krümmung des Leitungsbogens trifft das Schüttgut in vorteilhafter Weise, auch bei geringen Volumenströmen, aufgrund der Strömungsrichtung zwangsläufig auf die Innenwand der Leitung und erzeugt somit eine messbare mechanische Schwingung. Erfindungsgemäß wird somit eine Anordnung des Sensors vorgesehen, in welcher der Sensor zuverlässig eine mechanische Schwingung zur Erkennung von Verstopfungen aufnehmen kann.

In einer weiteren bevorzugten Ausführungsform weist der Strömungspfad mindestens ein Well-Rohr auf und der mindestens eine erste Sensor ist stromaufwärts des Verteilerkopfes im Bereich des Well-Rohres angeordnet. Erfindungsgemäß ist somit die Anordnung des Sensors in einem Bereich vorgesehen, in welchem durch die wellige Ausbildung des Rohres zuverlässig messbare mechanische Schwingungen durch das Auftreffen des Schüttguts an der Innenseite des Well-Rohres erfasst werden.

In einer weiteren bevorzugten Ausführungsform ist der mindestens eine erste Sensor einlassseitig am Verteilerkopf angeordnet ist. Die Anordnung des Sensors sieht vor, dass zuverlässig und ohne zeitliche Verzögerung messbare mechanische Schwingungen durch das Auftreffen des Schüttguts in dem Verteilerkopf bestimmt werden, bevor das Schüttgut in die Teilkanäle gelangt, in welchen eine Verstopfung einzeln erkannt werden muss.

Erfindungsgemäß ist der Sensor ein erster Sensor, und die Einrichtung zur Verstopfungserkennung weist ferner mindestens einen zweiten Sensor auf, welcher beabstandet zu dem ersten Sensor auslassseitig im Verteilerkopf oder in einem der Teilkanäle angeordnet ist.

Somit wird zuverlässig und ohne eine zeitliche Verzögerung eine Verstopfung stromaufwärts des Verteilerkopfes erkannt, ergänzend aber an mindestens einer beabstandeten zweiten Stelle eine mögliche Verstopfung durch den zweiten Sensor, welcher vorzugsweise auslassseitig in dem Verteilerkopf oder den einzelnen Teilkanälen angeordnet ist, erkannt.

Erfindungsgemäß ist der zweite Sensor dazu eingerichtet, eine thermoanemometrische Messgröße zu erfassen.

Besonders bevorzugt ist der mindestens eine erste Sensor stromaufwärts des Verteilerkopfes an einer der obenstehend beschriebenen Positionen des Strömungspfades angeordnet und dazu eingerichtet eine mechanische Schwingung der Leitung zu erfassen, ferner ist auslassseitig im Verteilerkopf in den Teilkanälen der mindestens eine zweite Sensor angeordnet, besonders bevorzugt ist ein zweiter Sensor in jedem der Teilkanäle angeordnet. Der zweite Sensor ist dazu eingerichtet eine thermoanemometrische Messgröße zu erfassen. Durch die Erkennung einer Verstopfung in einzelnen Teilkanälen des Strömungspfades kann der Wartungs- und Reparaturaufwand durch die schnelle Ortung der Verstopfung minimiert werden. Da sich der Massenstrom in den Teilkanälen durch die Teilung reduziert, führt eine verzögerte Erkennung der Verstopfung zu einem verhältnismäßig geringen Schaden, verglichen mit einer Verstopfung der Zuführleitung des Strömungspfades. Somit kann im Bereich des Verteilerkopfes mit einem kostengünstigeren Sensor mit reduzierter Genauigkeit bzw. Geschwindigkeit eine Messgröße zur Erkennung einer Verstopfung erfasst werden.

Der mindestens eine zweite Sensor, welcher ein thermoanemometrischer Sensor ist, weist einen mit einer Spannung beaufschlagbaren stromdurchflossenen Leiter auf, der wärmeleitend mit dem Strömungspfad verbunden ist.

Der stromdurchflossene Leiter weist hierbei einen Durchgangswiderstand auf, der sich in Abhängigkeit der Temperatur ändert, insbesondere mit steigender Temperatur zunimmt. Vorzugsweise ist der Durchgangswiderstand als PTC Widerstandselement ausgebildet, das sonst auch zur Strombegrenzung von elektronischen Baugruppen, insbesondere zur Kurzschlusssicherung eingesetzt wird. Der Widerstandswert des Durchgangswiderstands liegt bei 20°C bei etwa 100 Ohm. Bei ca. 60 °C erreicht der Durchgangswiderstand einen stabilen Arbeitspunkt, d.h. der Widerstand ist so groß, dass sich die Temperatur bei 60°C hält. Wird mehr Energie an das vorbeiströmende Fördergut abgeführt, senkt sich der Widerstand und es wird dem System mehr elektrische Energie zugeführt um den Arbeitspunkt bei 60°C zu halten. Dieser Strom (ca. 20 mA bei 12 V) wird vorzugsweise ausgewertet. Die Arbeitsweise des so ausgebildeten Sensors ist im Wesentlichen die Folgende: Eine Verstopfung stromaufwärts des Verteilerkopfes führt zu einer Störung bzw. Veränderung der Strömung. Somit wird die quantitative und qualitative Ausbildung der Strömung beeinflusst. Abhängig von der Schwere der Verstopfung ändert sich die Geschwindigkeit und Phasenzusammensetzung der Strömung. Der stromdurchflossene Leiter im Strömungspfad wird aufgrund der angelegten Spannung erwärmt. Weil der stromdurchflossene Leiter ferner mit dem Medium im Strömungspfad thermisch in Kontakt steht, findet bei einem Temperaturunterschied zwischen dem Fördergut Schüttgut und dem Leiter selbst ein Wärmetransport statt. Der Durchgangswiderstand des stromdurchflossenen Leiters ändert sich in Abhängigkeit des Wärmetransports zwischen dem Leiter und dem Fluid. Bei im Wesentlichen konstanten Strömungsbedingungen im Strömungspfad stellt sich hinsichtlich des im stromdurchflossenen Leiter gemessenen Stroms, seines Widerstands und der Temperatur ein Gleichgewichtszustand ein. Ändert sich aber die zwischen dem stromdurchflossenen Leiter und dem Strömungspfad auftretende Wärmeübergabe durch eine Veränderung der Strömungsgeschwindigkeit, Phasenzusammensetzung und anderer Symptome, die beim Verstopfen des Strömungspfades eintreten, verändert sich dieser Gleichgewichtszustand hin zu einer anderen Stromstärke, weil sich der Widerstand des stromdurchflossenen Leiters ändert.

In einer besonders bevorzugten Ausgestaltung der Erfindung weist der mindestens eine zweite Sensor eine thermisch leitfähige Messkappe auf. Vorzugsweise ist die Messkappe dazu eingerichtet, den zweiten Sensor mechanisch von dem Strömungspfad zu isolieren.

Der Werkstoff der Messkappe und/oder des zweiten Sensors wird vorzugsweise danach ausgewählt, dass sein Wärmedurchgangskoeffizient der Wärmeübertragung mit dem Medium möglichst hoch ist. Dazu muss der Werkstoff der Messkappe eine möglichst hohe Wärmeleitfähigkeit besitzen. Weitere Anforderungen sind mechanische (Abriebs-) und chemische (Korrosions-) Beständigkeit gegen das verwendete Fördergut, des Weiteren gute Bearbeitbarkeit und vertretbare Kosten. Als vorteilhaft hat sich hierbei beispielsweise Messing herausgestellt, da es diese teils konkurrierenden Anforderungen erfüllt.

Unter einer mechanischen Isolierung wird hierbei insbesondere verstanden, dass das Sensorelement vor mechanischer Beschädigung aufgrund von Partikeln im Fördergut geschützt wird.

Vorzugsweise ist zwischen der Messkappe und dem zweiten Sensor Wärmeleitpaste und wärmeleitende Verbindung zwischen dem zweiten Sensor und dem Strömungspfad angeordnet. In einer bevorzugten alternativen Ausgestaltung ist in der Messkappe ein Messfenster vorgesehen, in welchem der zweite Sensor angeordnet ist, so dass der zweite Sensor direkten Kontakt zum Fördergut aufnehmen kann. In diesem Fall isoliert die Messkappe den zweiten Sensor nicht vollständig mechanisch vom Strömungspfad, bildet aber zumindest einen mechanischen Stützkörper aus, der den zweiten Sensor stabilisiert.

Die Erfindung wird ferner vorteilhaft dadurch weitergebildet, dass der erste Sensor mindestens ein Piezoelement, insbesondere in piezoresistives und/oder ein piezokapazitatives Piezoelement aufweist. Die Erfindung macht sich die Erkenntnis zunutze, dass das Piezoelement kleinste mechanische Schwingungen, welche Deformationen des Piezoelements bedingen, beziehungsweise den Abstand der Kondensatorplatten eines piezokapazitativen Piezoelements verändern, erfasst und daraus vorzugsweise ein elektrisches Signal generiert. Piezoelemente benötigen nur einen geringen Bauraum und bieten zudem den Vorteil, dass sie selbst kleinste mechanische Schwingungen erfassen können.

Die Erfindung macht sich dabei die Erkenntnis zu Nutze, dass durch die Anbringung eines Piezoelements außen an einer Leitung des Strömungspfades die Gefahr eines vorzeitigen Ausfalls des hochohmigen Piezoelements infolge starker Spannungsfelder in der Umgebung, welche insbesondere durch Kollisionen von Saatgut, Staub, Dünger und anderer Schüttgüter hervorgerufen werden, minimiert wird.

In einer weiteren bevorzugten Ausführungsform der Erfindung weist der erste Sensor ein MEMS-System, insbesondere ein kapazitatives MEMS-System auf, welches beabstandet zu dem Strömungspfad angebracht ist. Die Erfindung macht sich die Erkenntnis zunutze, dass ein MEMS-System, welches in der Art eines Beschleunigungssensors nach dem Feder-Masse-Prinzip agiert, die Erfassung, Verarbeitung und Speicherung der, durch die mechanischen Schwingungen der Leitung erfassten elektrischen Signale unter Ausnutzung eines sehr geringen Bauraumes vorsieht. Durch den geringen Bauraumbedarf des MEMS-Systems lassen diese sich flexibel in minimal-invasiv in bestehende Systeme integrieren.

MEMS, auch als Micro-Electro-Mechanical Systems bekannt, sind winzige, insbesondere kleiner als ein Mikrometer große, Bauelemente, die Logikelemente und mikromechanische Strukturen in einem Chip vereinen. Diese Bauelemente verarbeiten mechanische und elektrische Informationen und können sowohl als Sensor, Aktor, aber auch Oszillator oder Filter ausgebildet sein.

In einer weiteren bevorzugten Weiterbildung der Erfindung weist das erfindungsgemäße Piezoelement eine piezokeramische Scheibe, und/oder eine formflexible piezoelektrische Polymer-Folie, und/oder ein piezokeramisches Kabel auf. Eine piezokeramische Scheibe bietet aufgrund der einfachen Gestaltung eine erste wirtschaftlich zu produzierende Variante eines Piezoelements. Eine formflexible elektrische Polymer-Folie ist vorteilhaft hinsichtlich der Anbringung an die Leitung des Strömungspfades und der formflexiblen Anpassung an die Außengeometrie und ein piezokeramisches Kabel ist ebenso vorteilhaft hinsichtlich der Anbringung an ein gekrümmtes, beziehungsweise gewelltes Rohr.

Die Erfindung wird vorteilhaft weitergebildet, indem der erste Sensor mit einer Magnethalterung gekoppelt ist, die mit einer Leitung des Strömungspfades verbunden ist. Der Sensor ist somit in vorteilhafter Weise mit einer Magnethalterung koppelbar und zu Wartungszwecken auch wieder von dieser und damit auch der Leitung des Strömungspfades lösbar.

In einer alternativen Ausgestaltung der Erfindung ist der erste Sensor mit einer Rohr-Schelle gekoppelt, die mit einer Leitung des Strömungspfades verbunden ist. Gemäß dieser Ausführung der Erfindung ist der Sensor somit mit einer Rohr-Schelle koppelbar und zu Wartungs- und Reparaturzwecken auch wieder von dieser und somit der Leitung des Strömungspfades lösbar.

In einer weiteren bevorzugten Weiterbildung der Erfindung ist die elektronische Auswertungseinheit dazu eingerichtet, in Abhängigkeit der erfassten mechanischen Schwingung des mindestens einen ersten Sensors und einer weiteren Messgröße des mindestens einen zweiten Sensors, eine Verstopfung in den Leitungen und/oder den einzelnen Teilkanälen zu erkennen. Erfindungsgemäß wird somit eine Ausgestaltung vorgeschlagen, welche die Erkennung von Verstopfungen in gezielten Bereichen des Strömungspfades vorsieht und somit die anschließende Wartung des Geräts zur Behebung der Verstopfung erleichtert.

Die Erfindung löst die ihr zugrundeliegende Aufgabe ferner durch ein Verfahren zum Verteilen von Schüttgut, insbesondere Saatgut, auf landwirtschaftlichen Nutzflächen, gemäß Anspruch 12.

Das Verfahren umfasst das Bereitstellen von Schüttgut, das Fördern des Schüttguts durch einen Strömungspfad in Richtung der Nutzfläche, wobei das Schüttgut durch mindestens eine Leitung des Strömungspfades gefördert wird, das Erfassen einer mechanischen Schwingung der Leitung mittels eines außen an der Leitung angebrachten ersten Sensors, und die Erkennung einer Verstopfung einer Leitung des Strömungspfades in Abhängigkeit der erfassten mechanischen Schwingung.

Erfindungsgemäß umfasst das Verfahren ferner das Erfassen einer thermoanemometrischen Messgröße mittels eines zweiten Sensors, und das Erkennen einer Verstopfung in den einzelnen Teilkanälen des Strömungspfades in Abhängigkeit der erfassten thermoanemometrischen Messgröße.

Das Verfahren wird vorteilhaft durch das Umwandeln der erfassten mechanischen Schwingung, insbesondere der Amplitude und/oder der Frequenz, in ein elektrisches Signal weitergebildet.

Ferner wird das Verfahren vorteilhaft durch das Vergleichen der Schwingung, insbesondere der Amplitude und/oder der Frequenz der erfassten mechanischen Schwingung, mit einem Schwellwert und der Erkennung einer Verstopfung bei unzulässigen Abweichung des Schwellwertes weitergebildet.

Weiter vorteilhaft wird das Verfahren durch das Erfassen einer mechanischen Schwingung durch mehrere diskrete und beabstandete Sensoren des gleichen Strömungspfades und der Erkennung einer Verstopfung in einer Leitung oder einzelnen Teilkanälen des Strömungspfades weitergebildet.

Die Erfindung wird im Folgenden unter Bezugnahme auf die beigefügten Figuren anhand eines bevorzugten Ausführungsbeispiels näher beschrieben. Hierbei zeigen:
- Fig. 1:: ein erfindungsgemäßes Verteilgerät gemäß einem bevorzugten Ausführungsbeispiel mit daran angeschlossenen Ausbringvorrichtungen,
- Fig. 2:: verschiedene bevorzugte Einbauszenarien eines Sensors oder mehrerer Sensoren im Strömungspfad des Verteilgerätes aus Figur 1 gemäß dem bevorzugten Ausführungsbeispiel,
- Fig. 3:: eine bevorzugte Ausführungsform der Anbringung des ersten Sensors an der Leitung des Strömungspfades, und
- Fig. 4:: eine alternative Ausführungsform der Anbringung des ersten Sensors an der Leitung des Strömungspfades.

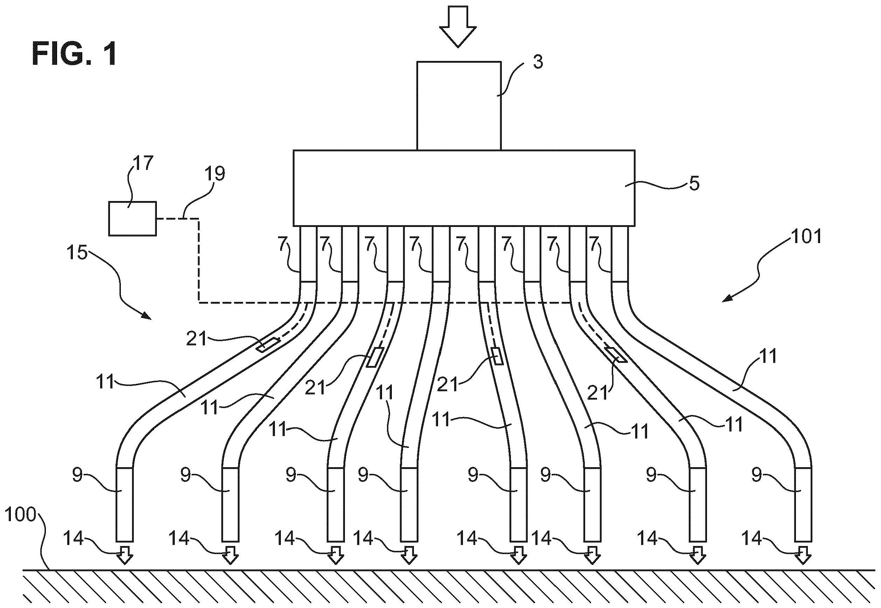

Figur 1 zeigt eine schematische Darstellung eines erfindungsgemäßen Verteilergerätes 1 nach einem bevorzugten Ausführungsbeispiel. Das in Figur 1 gezeigte Verteilgerät 101 weist einen Verteilerkopf 5 auf. Die Verteilerkopf 5 weist einen Schüttgut-Eingang 3 zum Anschluss an eine Schüttquelle auf. Die Verteilerkopf 5 kann eine Verteilerkopf bekannter Art sein und Mittel zum Dosieren und gleichmäßigen Verteilen des zugeführten Schüttgutes an eine Vielzahl von Schüttgut-Abgängen 7 aufweisen.

An das Gerät 101 ist eine Anzahl von einer oder mehreren Ausbringvorrichtungen 9 angeschlossen. Die Ausbringvorrichtungen 9 sind mit den Schüttgut-Abgängen 7 jeweils mittels eines Teilkanals 11 des Strömungspfades verbunden. Durch die Abgänge 7 und Leitungen 11 sind jeweils Strömungspfade von der Verteilerkopf 5 zu den Ausbringvorrichtungen 9 definiert.

Die Ausbringvorrichtungen 9 sind dazu eingerichtet, nach allgemein bekannter Art das geförderte Schüttgut in Richtung der Pfeile 14 auf eine landwirtschaftliche Nutzfläche 100 abzugeben. Dies bedingt, dass dem Gerät 101 zuvor entsprechendes Schüttgut zugeführt wird.

Das Gerät 101 gemäß Figur 1 weist ferner eine Einrichtung 15 zur Verstopfungserkennung auf.

Die Einrichtung 15 zur Verstopfungserkennung umfasst eine Auswerteinheit 17 und mindestens einen ersten Sensor 21. Der erste Sensor 21 ist signalleitend mit der Auswerteinheit 17 verbunden. Je nachdem, ob der erste Sensor 21 einen eigenen Signalwandler aufweist oder nicht, können die Leitungen 19 als Strom- oder Datenleitung ausgebildet sein. Der oder die Sensoren 21 sind jeweils außen an einer Leitung des Strömungspfades angebracht und dazu ausgelegt, eine vom Förderstrom im Strömungspfad abhängige mechanische Schwingung zu erfassen. Die elektronische Auswerteinheit 17 ist dazu eingerichtet, das von den Sensoren 21 erfasstes Signal mit einem Schwellwert zu vergleichen und eine Verstopfung zu erkennen.

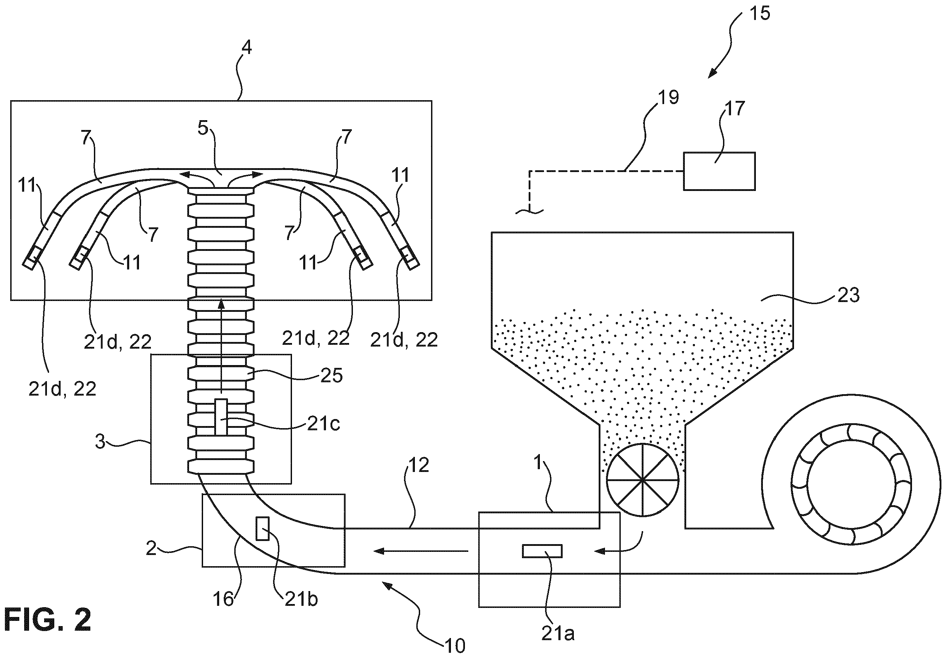

Figur 2 zeigt schematisch verschiedene bevorzugte Einbauszenarien des ersten Sensors 21 im Strömungspfad des Verteilgerätes 101 aus Figur 1. Der Ausschnitt des in Figur 2 gezeigten Geräts 101 weist einen Verteilerkopf 5 auf, welcher mit der Leitung 12 des Strömungspfades 10 zum Anschluss an die Schüttgutquelle 23 verbunden ist. Der Verteilerkopf 5 weist eine Vielzahl von Schüttgut-Abgängen 7 zum Dosieren und gleichmäßigen Verteilen des zugeführten Schüttgutes auf.

Der Verteilerkopf 5 weist ferner eine Vielzahl an mit den Schüttgutabgängen verbundenen Teilkanälen 11 auf.

Die Schüttgutquelle 23 ist mit dem Strömungspfad 10, insbesondere der Schüttgutleitung 12 verbunden und dazu eingerichtet Schüttgut bereitzustellen. Der Strömungspfad 10 umfasst ferner einen mit der Leitung 12 verbundenen Leitungsbogen 16 und ein an den Leitungsbogen anschließendes Well-Rohr 25. Das Well-Rohr 25 mündet in den Verteilerkopf 5.

Das Verteilgerät 101 weist ferner eine Einrichtung 15 zur Verstopfungserkennung auf.

Die Einrichtung 15 zur Verstopfungserkennung umfasst eine Auswerteinheit 17 und mindestens einen ersten Sensor 21 a-d. Der oder die ersten Sensor 21 a-d sind signalleitend mit der Auswerteinheit 17 verbunden. Je nachdem, ob die Sensoren 21 a-d einen eigenen Signalwandler aufweisen oder nicht, können die Leitungen 19 als Strom- oder Datenleitungen ausgebildet sein. Die Sensoren 21 a-d sind jeweils außen an einer Leitung des Strömungspfades 10 angebracht und dazu ausgelegt, eine vom Förderstrom am Strömungspfad abhängige mechanische Schwingung zu erfassen. Die elektronische Auswerteinheit 17 ist dazu eingerichtet, das von den ersten Sensoren 21a-d erfasste Signal mit einem Schwellwert zu vergleichen und eine Verstopfung zu erkennen.

Die ersten Sensoren 21 a-d können dabei jeweils an einer oder mehreren Positionen des Strömungspfades 1, 2, 3 und 4 angebracht sein. Ergänzend ist mindestens ein zweiter Sensor 22 vorzugsweise an Position 4 angeordnet.

Die Position 1 des Strömungspfades 10 wird durch den Bereich der Leitung 12, welche mit der Schüttgutquelle 23 verbunden ist, definiert. Der Sensor 21a ist außen an der Leitung 12 des Strömungspfades 10 angebracht und dazu ausgelegt, eine vom Förderstrom in der Leitung 12 abhängige mechanische Schwingung zu erfassen.

Die Position 2 des Strömungspfades 10 wird durch den Bereich des Leitungsbogens 16, welcher sich an die Leitung 12 des Strömungspfades 10 anschließt, definiert. Der Sensor21b ist außen an dem Leitungsbogen 16 angebracht und dazu ausgelegt, eine vom Förderstrom im Leitungsbogen 16 abhängige mechanische Schwingung zu erfassen.

Die Position 3 des Strömungspfades 10 wird durch den Bereich des Well-Rohes 25, welches sich an den Leitungsbogen 16 des Strömungspfades 10 anschließt, definiert. Der Sensor 21c ist außen an dem Well-Rohr 25 angebracht und dazu ausgelegt, eine vom Förderström im Well-Rohr 25 abhängige mechanische Schwingung zu erfassen.

Die Position 4 des Strömungspfades 10 wird durch den Bereich des Verteilerkopfes 5, welcher sich an das Well-Rohr 25 anschließt, definiert. Die mit dem Verteilerkopf 5 verbundenen Schüttgut-Abgänge 7 sind jeweils mit einem Teilkanal 11 verbunden. Der erste Sensor 21d und/oder der mindestens eine zweite Sensor 22 wird gemäß Position 4 auslassseitig im Verteilerkopf angebracht und dazu ausgelegt, eine vom Förderstrom in den Teilkanälen 11 abhängige mechanische Schwingung zu erfassen.

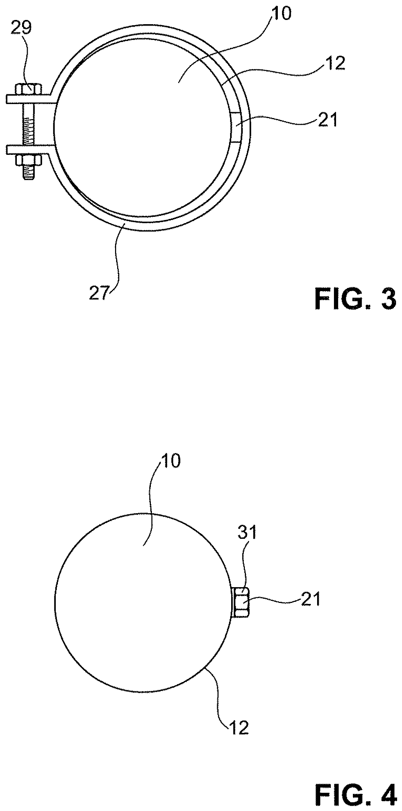

Figur 3 zeigt die Leitung 12 des Strömungspfades 10 an welcher der erste Sensor 21 au-βen angebracht ist. Der Sensor 21 ist mit einer Rohr-Schelle 27 gekoppelt, welche ein Verschlussmittel 29 aufweist. Die Rohr-Schelle 27 ist im geschlossenen Zustand dazu eingerichtet den Sensor außen an der Leitung 12 anzubringen.

Figur 4 zeigt die Leitung 12 des Strömungspfades 10 an welcher der erste Sensor 21 au-βen angebracht ist. Der Sensor 21 ist mit einer Magnethalterung 31 gekoppel. Die Magnethalterung 31 ist mit der Leitung 12 des Strömungspfades 10 koppelbar und dazu eingerichtet den Sensor 21 außen an der Leitung 12 anzubringen.

## Patentansprüche

1. Gerät (101) zum Verteilen von Schüttgut, insbesondere Saatgut, auf landwirtschaftliche Nutzflächen, mit
- einer Schüttgutquelle (23) zur Bereitstellung von Schüttgut,
- einem mit der Schüttgutquelle (23) verbundenen Strömungspfad (10), wobei der Strömungspfad (10) mindestens eine Leitung zum Fördern des Schüttguts von der Schüttgutquelle (23) in Richtung der Nutzfläche aufweist, und
- einer Einrichtung (15) zur Verstopfungserkennung in der mindestens einen, mehreren oder sämtlichen Leitungen des Strömungspfades (10),
wobei die Einrichtung (15) zur Verstopfungserkennung
- mindestens einen Sensor (21a-c) aufweist, der außen an der Leitung angebracht und dazu eingerichtet ist, mechanische Schwingungen der Leitung zu erfassen, sowie
- eine mit dem Sensor (21a-c) signalleitend verbundene Auswerteinheit (17), die dazu eingerichtet ist, in Abhängigkeit der erfassten mechanischen Schwingung eine Verstopfung zu erkennen,
wobei der Strömungspfad (10) einen mit der Leitung verbundenen Verteilerkopf (5) aufweist, welcher eine Mehrzahl an Schüttgutabgängen (7) aufweist, wobei die Schüttgutabgänge (7) durch jeweils einen Teilkanal (11) des Strömungspfades (10) mit Ausbringvorrichtungen (9) verbunden sind,
wobei der Sensor (21a-c) ein erster Sensor ist, und die Einrichtung zur Verstopfungserkennung ferner mindestens einen zweiten Sensor (22) aufweist, **dadurch gekennzeichnet, dass** der zweite Sensor (22) beabstandet zu dem ersten Sensor (21a-c) auslassseitig im Verteilerkopf (5) oder in einem der Teilkanäle (11) angeordnet ist, wobei der zweite Sensor (22) dazu eingerichtet ist, eine thermoanemometrische Messgröße zu erfassen.

2. Gerät (101) nach Anspruch 1,
wobei die mechanische Schwingung durch eine Frequenz und/oder eine Amplitude charakterisiert wird.

3. Gerät (101) nach Anspruch 1,
wobei der Sensor oder die Auswerteinheit (17) einen Signalwandler aufweist, welcher dazu eingerichtet ist, die erfasste mechanische Schwingung, insbesondere deren Amplitude und/oder Frequenz, in ein elektrisches Signal umzuwandeln, und/oder wobei die Auswerteinheit (17) dazu eingerichtet ist, die erfasste mechanische Schwingung mit einem Schwellwert zu vergleichen und bei einer unzulässigen Abweichung, von dem Schwellwert, eine Verstopfung zu erkennen.

4. Gerät (101) nach einem der vorstehenden Ansprüche,
wobei der Strömungspfad (10) mindestens eine Zuführleitung (12) aufweist und der Sensor (21a-c) stromaufwärts des Verteilerkopfes (5) im Bereich der Zuführleitung (12) angeordnet ist, oder wobei der Strömungspfad (10) mindestens einen Leitungsbogen (16) aufweist und der Sensor (21a-c) stromaufwärts des Verteilerkopfes (5) im Bereich des Leitungsbogens (16) angeordnet ist.

5. Gerät (101) nach einem der vorstehenden Ansprüche,
wobei der Strömungspfad (10) mindestens ein Well-Rohr (25) aufweist und der Sensor (21c) stromaufwärts des Verteilerkopfes (5) im Bereich des Well-Rohres (25) angeordnet ist.

6. Gerät (101) nach mindestens einem der vorstehenden Ansprüche,
wobei der Sensor einlassseitig an dem Verteilerkopf (5) angeordnet ist.

7. Gerät (101) nach mindestens einem der vorstehenden Ansprüche,
wobei der mindestens eine erste Sensor (21 a-c) stromaufwärts des Verteilerkopfes (5) an einer Leitung des Strömungspfades (10) angeordnet ist, und
der mindestens eine zweite Sensor (22) auslassseitig im Verteilerkopf (5) oder in einem der Teilkanäle (11) angeordnet ist.

8. Gerät (101) nach einem der vorstehenden Ansprüche,
wobei der mindestens eine erste Sensor (21a-c) mindestens ein Piezoelement, insbesondere ein piezoresistives und/oder ein piezokapazitatives Piezoelement, aufweist, wobei vorzugsweise das Piezoelement
- eine piezokeramische Scheibe, und/oder
- eine formflexible piezoelektrische Polymer-Folie, und/oder
- ein piezokeramisches Kabel aufweist.

9. Gerät (101) nach einem der vorstehenden Ansprüche,
wobei der mindestens eine erste Sensor (21a-c) ein MEMS, insbesondere ein kapazitatives MEMS in der Art eines Beschleunigungssensors nach dem Feder-Masse-Prinzip, welches beabstandet zu dem Strömungspfad (10) angebracht ist, aufweist.

10. Geräte (101) nach mindestens einem der vorstehenden Ansprüche,
wobei der mindestens eine erste Sensor (21a-c) mit einer Rohr-Schelle (27) gekoppelt ist, die mit einer Leitung des Strömungspfades (10) verbunden ist, und/oder wobei der mindestens eine erste Sensor (21 a-c) mit einer Magnethalterung (31) gekoppelt ist, die mit einer Leitung des Strömungspfades (10) verbunden ist.

11. Gerät (101) nach mindestens einem der vorstehenden Ansprüche,
wobei die elektronische Auswertungseinheit (17) dazu eingerichtet ist, in Abhängigkeit der erfassten mechanischen Schwingung des mindestens einen ersten Sensors (21a-c) und einer weiteren Messgröße des mindestens einen zweiten Sensors (22), eine Verstopfung in den Leitungen (12) und/oder den einzelnen Teilkanälen (11) zu erkennen.

12. Verfahren zum Verteilen von Schüttgut, insbesondere Saatgut, auf landwirtschaftlichen Nutzflächen mit einem Gerät (101) nach einem der vorstehenden Ansprüche,
umfassend folgende Schritte:
- Bereitstellen von Schüttgut
- Fördern des Schüttguts durch einen Strömungspfad in Richtung der Nutzfläche, wobei das Schüttgut durch mindestens eine Leitung des Strömungspfades (10) gefördert wird,
- Erfassen einer mechanischen Schwingung der Leitung mittels eines außen an der Leitung angebrachten ersten Sensors (21a-c), und
- Erkennen einer Verstopfung in einer Leitung des Strömungspfades (10) in Abhängigkeit der erfassten mechanischen Schwingung,
- Erfassen einer thermoanemometrischen Messgröße mittels eines zweiten Sensors (22), und
- Erkennen einer Verstopfung in den einzelnen Teilkanälen (11) des Strömungspfades (10) in Abhängigkeit der erfassten thermoanemometrischen Messgröße.

## Claims

1. Device (101) for distributing bulk material, in particular seeds, on agricultural areas, with
- a bulk material source (23) for the provision of bulk material,
- a flow path (10) connected with the bulk material source (23), wherein the flow path (10) comprises at least one line for conveying the bulk material from the bulk material source (23) towards the usable surface, and
- a device (15) for blocking detection in at least one, several or all lines of the flow path (10),
wherein the device (15) for blocking detection
- at least one sensor (21a-c), which is mounted on the outside at the line and is set up to detect mechanical vibrations of the line, as well as
- a value unit (17) connected to the sensor (21a-c) signal-oriented, which is set up as a function of the detected mechanical vibration, a blockage,
wherein the flow path (10) comprises a distributor head (5) connected with the line, which comprises a plurality of bulk material outlets (7), wherein the bulk material outlets (9) each have a partial channel (11) of the flow path (10) with the distributor head (5),
wherein the sensor (21a-c) is a first sensor, and the device for blocking detection further comprises at least one second sensor (22),
**characterized in that** the second sensor (22) is arranged at a distance to the first sensor (21a-c) on the outlet side (5) of the distributor head (5) or in one of the partial channels (11), wherein the second sensor (22) is configured to record a thermoemometric measurement variable.

2. A device (101) according to claim 1,
wherein the mechanical oscillation is **characterized by** a frequency and/or an amplitude.

3. A device (101) according to claim 1,
wherein the sensor or the evaluation unit (17) comprises a signal transducer, which is designed to convert the detected mechanical vibration, in particular its amplitude and/or frequency into an electrical signal, and/or
the evaluation unit (17) is designed to compare the detected mechanical oscillation with a threshold value and to detect a constipation with an unacceptable deviation from the threshold value.

4. A device (101) according to claim 1,
wherein the flow path (10) comprises at least one feed line (12) and the sensor (21a-c) upstream of the distributor head (5) is arranged in the area of the feed line (12), or
wherein the flow path (10) comprises at least one line bend (16) and the sensor (21a-c) upstream of the distributor head (5) is arranged in the area of the line bend (16).

5. A device (101) according to any one of the preceding claims,
wherein the flow path (10) comprises at least one well tube (25) and the sensor (21c) upstream of the distributor head (5) is arranged in the area of the well tube (25).

6. A device (101) according to any one of the preceding claims,
wherein the sensor is arranged on the distributor head (5) on the inlet side.

7. A device (101) according to any one of the preceding claims,
wherein at least one first sensor (21 a-c) upstream of the distributor head (5) is arranged on a line of the flow path (10), and
at least one second sensor (22) is arranged on the outlet side in the distributor head (5) or in one of the partial channels (11).

8. A device (101) according to any one of the preceding claims,
wherein at least one first sensor (21a-c) comprises at least one piezo element, in particular a piezoresistives and/or a piezo-capacity piezo element,
wherein the piezo element preferably has
- a piezoceramic disc and/or
- a form-flexible piezo-electric polymer film, and/or
- a piezoceramic cable.

9. A device (101) according to any one of the preceding claims,
wherein the at least one first sensor (21a-c) comprises a MEMS, in particular a capacity MEMS in the manner of an acceleration sensor according to the spring-mass principle, which is attached at a distance from the flow path (10).

10. A device (101) according to any one of the preceding claims,
wherein at least one first sensor (21a-c) is coupled with a pipe clamp (27) which is connected with a line of the flow path (10), and/or
wherein at least one first sensor (21 a-c) is coupled with a magnetic component (31), which is connected with a line of the flow path (10).

11. A device (101) according to any one of the preceding claims,
wherein the electronic analysis unit (17) is configured to detect a blockage in the lines (12) and/or the individual partial channels (11) depending on the recorded mechanical vibration of the at least one first sensor (21a-c) and a further measurement variable of the at least one second sensor (22).

12. A method for distributing bulk material, in particular seeds on agricultural areas with a device (101) according to any one of the preceding claims,
comprising the following steps:
- Provision of bulk material
- conveying the bulk material through a flow path in the direction of the usable area, wherein the bulk material is supported by at least one line of the flow path (10),
- detecting a mechanical vibration of the line by means of a first sensor (21a-c) mounted outside on the line,
- Detection of a blockage in a line of the flow path (10) depending on the detected mechanical vibration,
- detecting a thermoanemometric measurement variable by means of a second sensor (22) arranged on the outlet side in the distributor head (5), and
- Detection of a blockage in the individual sub channels (11) of the flow path (10) depending on the recorded thermoanemometric measurement size.

## Revendications

1. Appareil (101) pour la distribution de matière en vrac, en particulier de semence, sur des surfaces utiles agricoles, avec
- une source de matière en vrac (23) pour la fourniture de matière en vrac,
- un chemin d'écoulement (10) relié à la source de matière en vrac (23), dans lequel le chemin d'écoulement (10) présente au moins une conduite de transport de la matière en vrac de la source de matière en vrac (23) en direction de la surface utile, et
- un dispositif (15) pour la reconnaissance d'obstruction dans l'au moins une, plusieurs ou toutes les conduites du chemin d'écoulement (10),
dans lequel le dispositif (15) pour la reconnaissance d'obstruction
- présente au moins un capteur (21a-c) qui est monté à l'extérieur au niveau de la conduite et conçu afin de détecter des oscillations mécaniques de la conduite, ainsi que
- une unité d'évaluation (17) reliée de manière à acheminer le signal au capteur (21a-c) qui est conçue afin de reconnaître une obstruction en fonction de l'oscillation mécanique détectée,
dans lequel le chemin d'écoulement (10) présente une tête de distribution (5) reliée à la conduite qui présente une pluralité de sorties de matière en vrac (7), dans lequel les sorties de matière en vrac (7) sont reliées respectivement par un canal partiel (11) du chemin d'écoulement (10) à des dispositifs de distribution (9),
dans lequel le capteur (21a-c) est un premier capteur, et le dispositif de reconnaissance d'obstruction présente de plus au moins un second capteur (22), **caractérisé en ce que** le second capteur (22) est agencé à distance du premier capteur (21a-c) côté sortie dans la tête de distribution (5) ou dans un des canaux partiels (11), dans lequel le second capteur (22) est conçu afin de détecter une grandeur de mesure thermo-anémométrique.

2. Appareil (101) selon la revendication 1,
dans lequel l'oscillation mécanique est **caractérisée par** une fréquence et/ou une amplitude.

3. Appareil (101) selon la revendication 1,
dans lequel le capteur ou l'unité d'évaluation (17) présente un convertisseur de signal qui est conçu afin de convertir l'oscillation mécanique détectée, en particulier son amplitude et/ou sa fréquence, en un signal électrique, et/ou
dans lequel l'unité d'évaluation (17) est conçue afin de comparer l'oscillation mécanique détectée avec une valeur seuil et de reconnaître une obstruction en cas d'écart non autorisé de la valeur seuil.

4. Appareil (101) selon l'une quelconque des revendications précédentes,
dans lequel le chemin d'écoulement (10) présente au moins une conduite d'alimentation (12) et le capteur (21a-c) est agencé en amont de la tête de distribution (5) dans la zone de la conduite d'alimentation (12), ou dans lequel le chemin d'écoulement (10) présente au moins un arc de conduite (16) et le capteur (21a-c) est agencé en amont de la tête de distribution (5) dans la zone de l'arc de conduite (16).

5. Appareil (101) selon l'une quelconque des revendications précédentes,
dans lequel le chemin d'écoulement (10) présente au moins un tube ondulé (25) et le capteur (21c) est agencé en amont de la tête de distribution (5) dans la zone du tube ondulé (25).

6. Appareil (101) selon au moins l'une quelconque des revendications précédentes,
dans lequel le capteur est agencé côté entrée au niveau de la tête de distribution (5).

7. Appareil (101) selon au moins l'une quelconque des revendications précédentes,
dans lequel l'au moins un premier capteur (21a-c) est agencé en amont de la tête de distribution (5) au niveau d'une conduite du chemin d'écoulement (10), et
l'au moins un second capteur (22) est agencé côté sortie dans la tête de distribution (5) ou dans un des canaux partiels (11).

8. Appareil (101) selon l'une quelconque des revendications précédentes,
dans lequel l'au moins un premier capteur (21a-c) présente au moins un piézoélément, en particulier un piézoélément piézorésistif et/ou piézocapacitif, dans lequel de préférence le piézoélément
- présente un disque piézocéramique, et/ou
- un film polymère piézoélectrique de forme flexible, et/ou
- un câble piézocéramique.

9. Appareil (101) selon l'une quelconque des revendications précédentes,
dans lequel l'au moins un premier capteur (21a-c) présente un MEMS, en particulier un MEMS capacitif comme un capteur d'accélération selon le principe ressort-masse qui est monté à distance du chemin d'écoulement (10).

10. Appareil (101) selon au moins l'une quelconque des revendications précédentes,
dans lequel l'au moins un premier capteur (21a-c) est couplé à un collier de tube (27) qui est relié à une conduite du chemin d'écoulement (10), et/ou dans lequel l'au moins un premier capteur (21a-c) est couplé à un support magnétique (31) qui est relié à une conduite du chemin d'écoulement (10).

11. Appareil (101) selon au moins l'une quelconque des revendications précédentes,
dans lequel l'unité d'évaluation (17) électronique est conçue afin de reconnaître, en fonction de l'oscillation mécanique détectée d'au moins un premier capteur (21a-c) et d'une autre grandeur de mesure d'au moins un second capteur (22), une obstruction dans les conduites (12) et/ou les canaux partiels (11) individuels.

12. Procédé de distribution de matière en vrac, en particulier de semence, sur des surfaces utiles agricoles avec un appareil (101) selon l'une quelconque des revendications précédentes,
comprenant les étapes suivantes consistant à :
- fournir de la matière en vrac,
- transporter de la matière en vrac par un chemin d'écoulement en direction de la surface utile, dans lequel la matière en vrac est transportée par au moins une conduite du chemin d'écoulement (10),
- détecter une oscillation mécanique de la conduite au moyen d'un premier capteur (21a-c) monté à l'extérieur au niveau de la conduite, et
- reconnaître une obstruction dans une conduite du chemin d'écoulement (10) en fonction de l'oscillation mécanique détectée,
- détecter une grandeur de mesure thermo-anémométrique au moyen d'un second capteur (22), et
- reconnaître une obstruction dans les canaux partiels (11) individuels du chemin d'écoulement (10) en fonction de la grandeur de mesure thermo-anémométrique.
